# EUROPEAN PATENT SPECIFICATION

(11) **EP 1 615 111 B1**
(45) Date of publication and mention of the grant of the patent: **02.01.2008**
(21) Application number: 04254101.1
(22) Date of filing: 08.07.2004
(51) Int. Cl.: G06F 3/023, G06F 17/27

(54) **Adding interrogative punctuation to an electronic message**
Hinzufügen von Fragezeichen zu elektronischen Nachrichten
Addition de points d'interrogation dans des messages électroniques

(43) Date of publication of application: 11.01.2006
(73) Proprietor: Research In Motion Limited, Waterloo, Ontario N2L 3W8 (CA)
(72) Inventor: Griffin, Jason T., Waterloo, Ontario N2T 2J5 (CA)
(74) Representative: Hibbert, Juliet Jane Grace

(56) References cited:
- EP-A- 1 031 914
- WO-A-02/37472
- WO-A-99/15952
- US-A- 5 737 617
- US-A- 6 067 514
- US-B1- 6 396 482
- "AUTOMATIC CAPITALIZATION AND SPACING OF SENTENCES" IBM TECHNICAL DISCLOSURE BULLETIN, IBM CORP. NEW YORK, US, vol. 28, no. 9, February 1986 (1986-02), pages 4160-4161, XP001028463 ISSN: 0018-8689

## Description

### BACKGROUND OF THE INVENTION

### Field of the Invention

Aspects of this invention are related to increasing the efficiency of inputting interrogative punctuation into electronic messages, such as those generated in a handheld electronic device.

### Background Information

Electronic messages, such as those communicated through handheld electronic devices, are often assembled through typing on a keyboard. Some such devices have a reduced keyboard with multiple characters, which can include punctuation marks, assigned to each key. Several schemes for disambiguating the multiple characters assigned to a key include selective action on the key, such as for instance rocking the key one way or another; actuation of a common additional, disambiguating input; or text interpretation. In the latter case, the device predicts the character that was intended by the user based upon a set of rules, or selects a character based on the probability that a word stored in a list in memory is being entered. Characters previously selected can change as additional keystrokes are entered and the possible combinations of characters intended narrows.

Commonly owned U.S. Patent No. 6,396,482 discloses an electronic handheld device in which a sentence can be terminated by actuating the spacebar twice in succession. This action inserts a "." (period) at the end of the sentence, adds a space, and initiates capitalization of the next character input as the first letter of the first word of a new sentence. However, the "?" (question mark) shares a key and is selected by simultaneous actuation of a specialized key.

### SUMMARY OF THE INVENTION

In accordance with one embodiment of the invention, interrogative punctuation is automatically added to a sequence of characters input to a handheld electronic device when a combination of the first and third words at the beginning of the sequence of characters or after a comma or semicolon is indicative of an interrogatory. The interrogative punctuation includes the placement of a "?" (question mark) at the end of the sequence of characters, and for the Spanish language, the additional insertion of "¿" (inverted question mark) at the beginning of the sequence of characters. Where the "?" (question mark) is added at the end of the terminated sequence of characters by depressing a spacebar twice in succession, a space can be added after the "?" (question mark).

More particularly, one aspect of the invention is directed to a method of inputting interrogative punctuation into text generated by a handheld electronic device comprising the steps of: inputting a sequence of characters comprising the text; examining the sequence of characters for a first word at the beginning of the sequence or after a comma or semicolon indicative of an interrogatory; and inputting termination of the sequence of characters and automatically adding the interrogative punctuation to the sequence of characters when the irst word at the beginning of the sequence of characters is indicative of an interrogatory. Where the handheld electronic device has a keyboard including character keys and a full stop input, inputting the sequence of characters comprises actuating the character keys and inputting termination of the sequence of characters comprises actuating the full stop input. Where the full stop input is a spacebar, actuating the full stop input comprises actuating the space bar twice in succession to add a "?" (question mark) at the end of the at least one sequence of characters. This double actuation of the spacebar can also be used to enter a space after the "?" (question mark) and to capitalize the first word of a second sequence of characters input following double spacebar activation.

The examining of the at least one sequence of characters for at least one word at the beginning indicative of an interrogatory comprises storing a list of words indicative of an interrogatory when occurring at the beginning of the sequence of characters, identifying the word at the beginning of the sequence of characters and searching the list for a match for that word at the beginning of the sequence. The storing of the list of words further comprises storing selected combinations of first and third words indicative of an interrogatory when occurring at the beginning of the sequence of characters, identifying the first and third words of the sequence of characters and searching the list for a match for the first and third words.

Where the at least one sequence of characters defines a statement in the Spanish language, automatically adding interrogative punctuation comprises adding "¿" (inverted question mark) at the beginning of the sequence of characters in addition to adding "?" (question mark) at the end of the sequence of characters.

Another aspect of the invention is directed to a handheld electronic device comprising: a keyboard having a plurality of keys though which a sequence of characters can be input and a termination input through which the sequence of characters can be terminated; a display in which the sequence of characters input is displayed; and a processor comprising means examining the sequence of characters for one word in the beginning of the sequence of characters indicative of an interrogatory, and means for adding interrogative punctuation to the sequence of characters on the display when the termination input is actuated and the word at the beginning of the sequence of characters is indicative of an interrogatory. The means for examining the sequence of characters can comprise a memory for storing a list of words that are indicative of an interrogatory when occurring at the beginning of the sequence of characters, means identifying the first word at the beginning of the sequence of characters, and means searching the list for a match for the word at the beginning of the sequence of characters. The memory further stores in a list selected combinations of a first word and a third word in a sequence of characters which are indicative of an interrogatory, the means identifying the first word that also identifies the third word in the sequence of characters and the means searching searches for a match for the first and third words in the sequence of characters.

As to another aspect of the invention, the keyboard can further include means to override the interrogative punctuation.

### BRIEF DESCRIPTION OF THE DRAWINGS

A full understanding of the invention can be gained from the following description of the preferred embodiments when read in conjunction with the accompanying drawings in which:
Figure 1 is a front view of a handheld device incorporating the invention.
Figure 2 is a block diagram of the major subsystems of the handheld device of Figure 1 relevant to the implementation of embodiments of the invention.
Figures 3A and 3B when placed side by side present a flowchart illustrating the major steps through which the embodiment of the invention is carried out.

### DESCRIPTION OF THE PREFERRED EMBODIMENTS

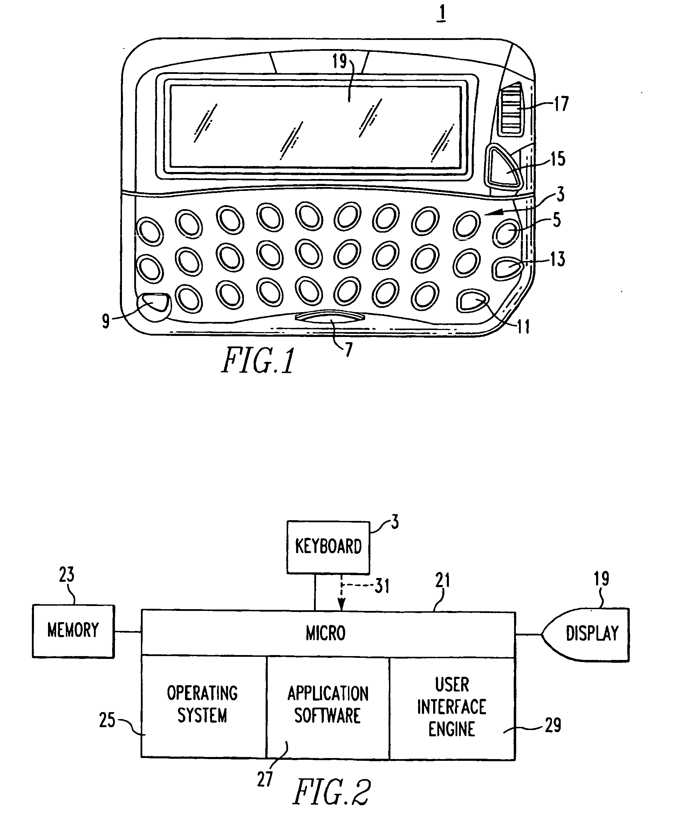

Aspects of the invention are directed to a method and an apparatus for automatically adding interrogative punctuation to electronic messages. Figure 1 illustrates an exemplary handheld electronic device 1 through which the various aspects of the invention may be implemented. The device 1 has a keyboard 3 that includes a plurality of keys 5. The keys 5 implement a "qwerty" keyboard. Alternatively, the keyboard 3 can have a reduced number of keys 5 where each key can input multiple characters. Even in the case of the "qwerty" keyboard of the exemplary device, the keys 5 can input additional characters beside the letters of the "qwerty" keyboard such as numerals and punctuation marks. The present invention may also be used with a full keyboard (not shown).

The keyboard 3 shown includes a number of specialized keys in addition to the keys 5. The specialized keys include a spacebar 7, an alt key 9, a cap key 11, a line feed key 13 and a backspace key 15. A thumbwheel 17 can be used to scroll through (by rotating) and selecting (by pressing the edge) entries on a display 19.

As is known, the device 1 can perform a number of functions, such as for example, sending and receiving e-mails wirelessly, recording notes, storing addresses, maintaining a calendar, and other functions. Many of these functions involve typing in text using the keyboard 3 in a well-known manner. The characters appear in sequence on the display 19 as they are entered. In accordance with an aspect of the invention, the spacebar 7 can also serve as a termination input for terminating the sequence of characters such as at the end of a sentence. This function is implemented by pressing the spacebar twice in succession. As discussed above, this double actuation of the spacebar 7 has been used prior to the present invention to place a "." (period) at the end of the terminated sequence of characters, e.g., the end of a sentence, to add a space after the "." (period) and to initiate capitalization of the next character as the first letter of the first word in a new sentence.

In accordance with this aspect of the present invention, this termination of the sequence of characters, such as by pressing the spacebar 7 twice in succession, results in the addition of interrogative punctuation to the sequence of characters when the first word of the sequence is indicative of an interrogatory. For example, the words "who," "what," "where," and "why" when appearing at the beginning of a sentence indicate that a question is being asked and interrogative punctuation needs to be added to the sequence of characters. Up to now, it has been necessary to manually add the proper punctuation by selecting the appropriate key or keys on the keyboard. In accordance with the invention, the interrogative punctuation is automatically entered when the sequence of characters is terminated such as by pressing the spacebar 7 twice. Other user action, other than pressing the spacebar twice in succession, may be used to terminate the sequence of characters and enter the interrogative punctuation. Use of the double actuation of the spacebar is particularly advantageous as it functions well with the previous practice of using this action to terminate declarative sentences and insert a period. When the two practices are combined, the proper punctuation is inserted with minimum strokes. It should be appreciated that the sequence of characters need not be a complete sentence. For instance, it is common to generate simple statements such as "why?" or "where?" in text messaging for convenience, and economy of time and effort. The sequence is terminated by the user initiating the termination of the sequence of characters at the desired point.

In accordance with an embodiment of the invention, the recognition of whether the first word in the sequence of characters is indicative of an interrogatory is carried out by determining if the first word matches any such words stored in a stored list. An exemplary list is set forth in Table 1 as follows:

**Table 1**

| | | |
|---|---|---|
| are | aren't | how |
| can | can't | were |
| could | couldn't | why |
| does | doesn't | won't |
| is | isn't | who |
| should | shouldn't | whom |
| would | wouldn't | what |
| where did | where'd | when |
| | | where |
| | | whose |

The first word of the sequence of characters is determined by the first actuation of the spacebar in the sequence of characters. Of course, if the double actuation of the spacebar occurs before any single actuation, a one word interrogatory statement has been entered and the interrogative punctuation is inserted.

Interrogative punctuation entered automatically by the device is the "?" (question mark) at the end of the sequence of characters. If the Spanish language has been selected "¿" (inverted question mark) is also added at the beginning of the sequence of characters. As mentioned, the double actuation of the spacebar 7 can also enter a space after the "?" (question mark) and initiate capitalization of the first character entered in the next sequence of characters, i.e., the next sentence.

If the user does not want the interrogative punctuation, it can be removed manually and replaced by the desired punctuation using the keyboard. Some words that appear at the beginning of a sentence or statement may initiate a declaratory or interrogatory statement. The ambiguity may often be resolved by subsequent words in the sequence of characters. For instance, the word "do" may launch a declaratory statement; "Do it now." or an interrogatory statement "Do you have it?". Thus, in accordance with another aspect of the invention, the sequence of characters can also be examined for combinations of the first word with other words that are indicative of an interrogatory. In the example above, the first and successive (e.g., third or fourth) words combine to establish an interrogatory. The second word is not determinative. For instance, the second statement may be "Do we have it?". Thus, combinations of first and third words in the sequence of characters indicative of an interrogatory statement can be added to the list. Examples of such combinations of words are as follows:

**Table 2**

| | | | |
|---|---|---|---|
| do_ have | does_ have | do_ care | does_ care |
| do_ want | does _ want | do _ need | does_need |
| do_know | does_know | | |

Words indicative of an interrogatory do not necessarily occur at the beginning of a sentence. For instance, an interrogatory sentence may begin with a prepositional phrase such as, "if it rains, what shall we do?". Thus, in accordance with another aspect of the invention, the list of words is searched for a match for the first word, or the first and third words occurring after a comma or a semicolon. Again, if automatic insertion of interrogative punctuation is not desired, it can be removed manually, but for most occasions, the correct punctuation will be automatically inserted, thereby expediting the message formation process.

Thus, in accordance with aspects of the invention, interrogative punctuation is inserted into text generated by a handheld device by: 1) inputting a desired sequence of characters; 2) examine the sequence of characters for the first word, or the first and third words at the beginning of the sequence or after a comma or semicolon, indicative of an interrogatory, and 3) inputting termination of the sequence of characters, such as by actuation of the spacebar twice in succession, and automatically adding interrogative punctuation to the sequence of characters when the first word or the first and third words at the beginning of the sequence or after a comma or semicolon, is or are indicative of an interrogatory.

While in the exemplary method, the first word or the first and third words, are identified and matched as the characters are inserted, this matching may be implemented at the time the input of the sequence of characters is terminated.

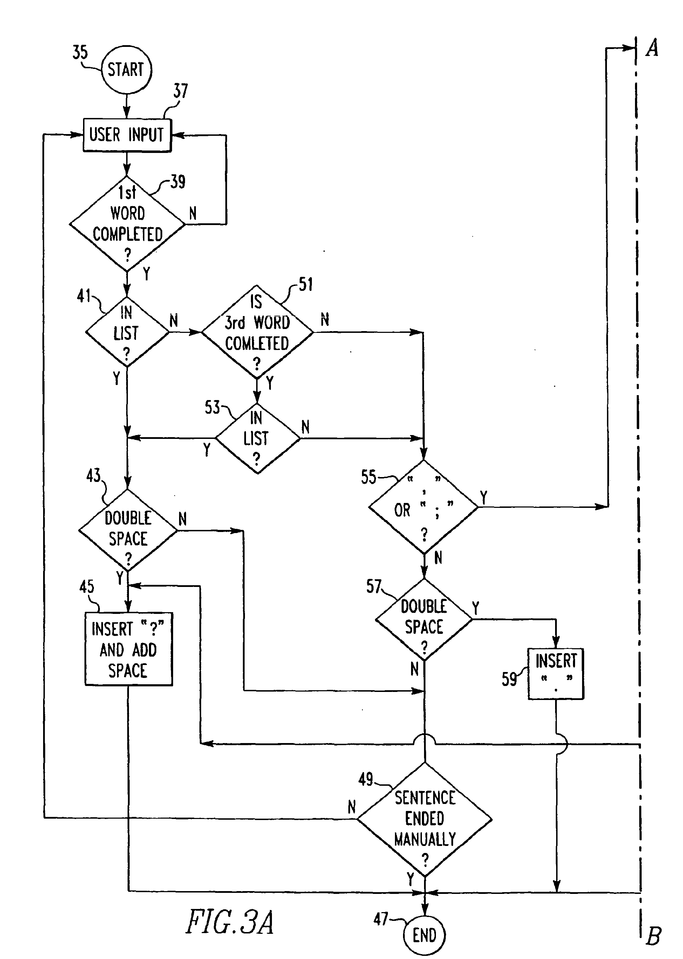

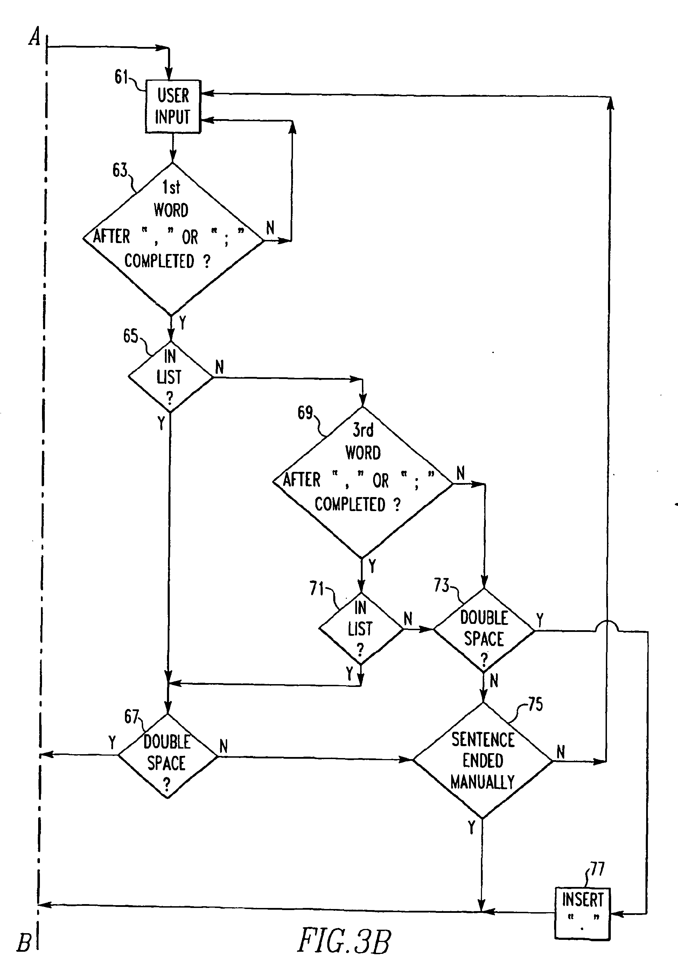

Figure 2 illustrates in block form the major subsystems of the handheld device 1 involved in automatically adding interrogative punctuation to a sequence of characters. The major subsystems include the keyboard 3, a microprocessor 21, a memory 23, and the display 19. This microprocessor 21 runs various software including the operating system 25, applications software 27 and a user interface engine 29. The operating system 25 controls the overall operation of the microprocessor 21 including its interaction with the keyboard 3, memory 23 and display 19, as well as managing the operation of the remaining software, such as the application software 27 and user interface engine 29. Actuation of the keyboard 3 results in a keyboard signal 31 that is received by the microprocessor 21 and directed by the operating system 25 to the application software 27. The application software 27, in turn, performs the routine 33, illustrated in Figure 3, that includes accessing lists of words stored in the memory 23 - for example, those listed in Table 1. The user interface engine 29 controls generation on the display 19 of the message incorporating the interrogative punctuation in accordance with aspects of the invention.

Turning to Figures 3A and 3B, the routine 33 when called at 35 monitors at 37 the user input in the form of the keyboard signals 31. As the sequence of characters is entered, the routine 33 checks at 39 for the end of the first word, which is indicated by a single actuation of the spacebar 7. If this first word is on the list of first words stored in the memory 23, which are indicative of an interrogatory as determined at 41, the inputs are monitored for termination of the sequence of characters as indicated by detection of the double actuation of the spacebar at 43. When this is detected, the interrogative punctuation is added at 45 by inserting the "?" (question mark). In addition, a space is entered after the "?" (question mark) and then the routine is exited at 47. Until the end of the sequence is detected by the entry of the double space at 43, a check is made at 49 for manual ending of the sequence of characters such as entry by the user of the "?" (question mark) by the customary sequence of keyboard signals. As long as the sequence of characters is not terminated, either by the detection of the double spacebar actuation at 43 or the manual ending of the sentence at 49, the routine 33 loops back to pickup the next user input at 37. If the first word is not on the list of first words indicative of an interrogatory when checked at 41, the sequence of characters entered is monitored for completion of the third word at 51. If the first and third words are in the list of words indicative of an interrogatory as detected at 53 - for example, those listed in Table 2, then the routine waits for termination of the sequence of characters either though entry of the double actuation of the spacebar at 43 or the manual ending of the sentence at 49 in the manner described. In one example there are separate lists of first words and successive words (such as third words and/or fourth words). In another example first and successive words are both on a single list. In yet other examples, there are separate lists for stand alone first words (e.g., why), first words that may require a successive word (e.g., do), and third words (e.g., have).

If neither the first word nor the combination of the first word and third word are in the lists of words indicative of interrogatories, a check is made at 55 for a comma or semicolon in the sequence of characters. If no comma or semicolon has been detected, and the sequence of characters is not terminated by double actuation of the space bar at 57, the routine 33 continues to cycle as each character is entered until the sentence is ended manually at 49. On the other hand, detection of double activation of the spacebar at 57, indicates termination of a declaratory statement (no interrogatory), and hence a "." is entered at 59 and the routine is exited at 47.

When a comma or semicolon is detected at 55 in the sequence of characters entered, the routine 33 operates similarly to before detection of a comma or semicolon by monitoring the additional characters entered at 61 looking for completion of the first word after the comma or semicolon at 63 and determining at 65 whether this word is on the list of first words indicative of interrogatory. If it is, and a double actuation of spacebar is detected at 67, then the interrogative punctuation is entered at 45. However, if the first word after the internal punctuation is not in the list, as detected at 69, then upon completion of the third word after the internal punctuation, these words are checked against the list of first and third words indicative of an interrogatory at 71. If the words are on the list, and subsequently a double spacebar actuation is detected at 67, the interrogative punctuation is entered at 45. Until the third word after the internal punctuation is completed, or after it is determined that these words are not on the list of words indicative of an interrogatory at 69, the routine 33 cycles back waiting for the next user input at 61 or ends the routine upon detection of a double space at 73 or of manual termination of the sentence at 75. Again, if the first word and the first and third words after a comma or semicolon are not on the lists indicating that the statement being typed is not an interrogatory, a "." (period) is entered at 77 when the sequence is terminated by double actuation of the space bar at 73.

While specific embodiments of the invention have been described in detail, it will be appreciated by those skilled in the art that various modifications and alternatives to those details may be developed in light of the overall teachings of the disclosure. Accordingly, the particular arrangements disclosed are meant to be illustrative only and not limiting as to the scope of the invention which is to be given the full breadth of the claims appended.

### Reference Character List

- 1: hand held electronic device
- 3: keyboard
- 5: keys (ltrs, #s, and punct)
- 7: spacebar
- 9: alt key
- 11: cap key
- 13: line feed
- 15: space
- 17: thumbwheel
- 19: display
- 21: microprocessor
- 23: memory
- 25: operating system
- 27: applications software
- 29: user interface engineering requirements
- 31: keyboard signal
- 33: punctuation routine

## Claims

1. A method of inputting interrogative punctuation into text generated by a handheld electronic device (1), the method comprising the steps of:
inputting a sequence of characters comprising the text;
examining the sequence of characters for a first word at the beginning of the sequence of characters;
determining that the first word is not present in a list of first words indicative of an interrogatory;
examining the sequence of characters for a third word from the beginning of the sequence of characters in response to the first word not being present in the list of first words;
determining whether a first combination comprising the first word and the third word is present in a list of combinations of first and third words indicative of an interrogatory; and
inputting termination of the sequence of characters and automatically adding the interrogative punctuation to the sequence of characters in response to the first combination being present in the list of combinations.

2. The method of Claim 1, wherein the handheld electronic device (1) has a keyboard (3) including character keys (5) and a full stop input and wherein inputting the sequence of characters comprises actuating the character keys (5) and wherein inputting termination of the sequence of characters comprises actuating the full stop input.

3. The method of Claim 2, wherein the full stop input is a spacebar (7) and activating the full stop input comprises actuating the spacebar (7) twice in succession.

4. The method of Claim 3, wherein actuating the spacebar (7) twice in succession adds a "7" (question mark) at the end of the sequence of characters.

5. The method of Claim 4, wherein actuating the spacebar (7) twice further adds a space after the "?" (question mark).

6. The method of Claim 1, wherein automatically adding the interrogative punctuation comprises adding a "?" (question mark) at the end of the sequence of characters.

7. The method of Claim 6, wherein the sequence of characters defines a statement in the Spanish language, and automatically adding the interrogative punctuation comprises adding "¿" (inverted question mark) at the beginning of the sequence of characters and adding a "?" (question mark) at the end of the sequence of characters.

8. The method of Claim 1 further comprising:
examining the sequence of characters for another first word after a comma or semicolon;
determining whether the another first word is present in the list of first words indicative of an interrogatory ;
examining the sequence of characters for another third word after the comma or semicolon in response to the another first word not being present in the list of first words;
determining whether a second combination comprising the another first word and the another third word is present in the list of combinations; and
inputting termination of the sequence of characters and automatically adding the interrogative punctuation to the sequence of characters in response to the another first word being present in the list of first words or the second combination being present in the list of combinations.

9. A handheld electronic device (1) comprising:
a keyboard (3) having a plurality of keys (5) through which sequence of characters can be input and a termination input through which the sequence of characters can be terminated;
a display (19) on which the sequence of characters input is displayed; and
a processor (21) comprising means for examining the sequence of characters for a first word at the beginning of the sequence of characters; means for determining that the first word is not present in a list of first words indicative of an interrogatory;
means for examining the sequence of characters for a third word at the beginning of the sequence of characters in response to the first word not being present in the list of first words;
means for determining whether a first combination comprising the first word and the third word is present in a list of combinations of first and third words indicative of an interrogatory;
and means for adding interrogative punctuation to the sequence of characters on the display (19) in response to the first combination being present in the list of combinations when the termination input is actuated.

10. The device (1) of Claim 9, wherein the means having the interrogative punctuation adds a "?" (question mark) at the end of the sequence of characters.

11. The device (1) of Claim 10, wherein the sequence of characters expresses words in the Spanish language and the means adding the interrogative punctuation to the sequence of characters further adds a "¿" (inverted question mark) in front of the sequence of characters.

12. The device (1) of Claim 9, wherein the keyboard further includes means to override the interrogative punctuation.

13. The device (1) of Claim 9, wherein the termination input comprises a spacebar (7) that is actuated twice to terminate the sequence of characters.

14. The device of Claim 13, wherein the spacebar adds a space after the "?" (question mark) at the end of the sequence of characters when actuated twice in succession.

15. The device of Claim 9 wherein the processor (21) further comprises
means for examining the sequence of characters for a another first word after a comma or a semicolon; means for determining whether the another first word is present in the list of first words indicative of an interrogatory means;
for examining the sequence of characters for another third word after a comma or semicolon in response to the another first word not being present in the list of first words;
means for determining whether a second combination comprising the another first word and the another third word is present in the list of combinations;
and the means for adding interrogative punctuation further comprises means for adding the interrogative punctuation to the sequence of characters when the termination input is actuated in response to the another first word being present in the list of first words or the second combination being present in the list of combinations.

## Patentansprüche

1. Verfahren zum Eingeben einer interrogativen Interpunktion in einem Text, der durch eine tragbare elektronische Vorrichtung (1) erzeugt wird, wobei das Verfahren die Schritte umfasst:
Eingeben einer Folge von Zeichen, welche den Text umfassen, Untersuchen der Folge von Zeichen nach einem ersten Wort an dem Anfang der Folge von Zeichen,
Bestimmen, dass das erste Wort nicht in einer Liste von ersten Wörtern, die eine Frage anzeigen, vorhanden ist,
Untersuchen der Folge von Zeichen nach einem dritten Wort von dem Anfang der Folge von Zeichen in Antwort auf das erste Wort, das nicht in der Liste von ersten Wörtern vorhanden ist,
Bestimmen, ob eine erste Kombination, welche das erste Wort und das dritte Wort umfasst, in einer Liste von Kombinationen von ersten und dritten Wörtern, die eine Frage anzeigen, vorhanden ist, und
Eingegeben einer Beendigung der Folge von Zeichen und automatisches Hinzufügen der interrogativen Interpunktion der Folge von Zeichen in Antwort auf die erste Kombination, die in der Liste von Kombinationen vorhanden ist.

2. Verfahren nach Anspruch 1, wobei die tragbare elektronischer Vorrichtung (1) eine Tastatur (3), welche Zeichentasten (5) und eine vollständige Stopp-Eingabe umfasst, aufweist und wobei ein Eingeben der Folge von Zeichen ein Betätigen der Zeichentasten (5) umfasst und wobei ein Eingeben einer Beendigung der Folge von Zeichen ein Betätigen der vollständigen Stopp-Eingabe umfasst.

3. Verfahren nach Anspruch 2, wobei die vollständige Stopp-Eingabe eine Leertaste (7) ist und ein Aktivieren der vollständigen Stopp-Eingabe ein zweimaliges hintereinanderfolgendes Betätigen der Leertaste (7) umfasst.

4. Verfahren nach Anspruch 3, wobei ein zweimaliges hintereinanderfolgendes Betätigen der Leertaste (7) ein "?" (Fragezeichen) an das Ende der Folge von Zeichen hinzufügt.

5. Verfahren nach Anspruch 4, wobei ein zweimaliges hintereinanderfolgendes Betätigen der Leertaste (7) weiterhin einen Leerraum nach dem "?" (Fragezeichen) hinzufügt.

6. Verfahren nach Anspruch 1, wobei ein automatisches Hinzufügen der interrogativen Interpunktion ein Hinzufügen eines "?" (Fragezeichen) an das Ende der Folge von Zeichen umfasst.

7. Verfahren nach Anspruch 6, wobei die Folge von Zeichen eine Stellungnahme in spanischer Sprache definiert und ein automatisches Hinzufügen der interrogativen Interpunktion ein Hinzufügen eines "¿" (Umgedrehtes Fragezeichen) an den Anfang der Folge von Zeichen und ein Hinzufügen eines "?" (Fragezeichen) an das Ende der Reihefolge von Zeichen umfasst.

8. Verfahren nach Anspruch 1, das weiterhin umfasst:
Untersuchen der Folge von Zeichen nach einem weiteren ersten Wort nach einem Komma oder Strichpunkt,
Bestimmen, ob das weitere erste Wort in der Liste von ersten Wörtern, die eine Frage anzeigen, vorhanden ist,
Untersuchen der Folge von Zeichen nach einem weiteren dritten Wort nach dem Komma oder Strichpunkt in Antwort auf das weitere erste Wort, das nicht in der Liste von ersten Wörtern vorhanden ist,
Bestimmen, ob eine zweite Kombination, welche das weitere erste Wort und das weitere dritte Wort umfasst, in der Liste von Kombinationen vorhanden ist, und
Eingegeben einer Beendigung der Folge von Zeichen und automatisches Hinzufügen der interrogativen Interpunktion der Folge von Zeichen in Antwort auf das weitere erste Wort, das in der Liste von ersten Wörtern vorhanden ist, oder eine zweite Kombination, die in der Liste von Kombinationen vorhanden ist.

9. Tragbare elektronische Vorrichtung (1), die umfasst:
Eine Tatstatur (3), die eine Vielzahl von Tasten (5), durch welche eine Folge von Zeichen eingegeben werden kann, und eine Beendigungs-Eingabe, durch welche die Folge von Zeichen beendet werden kann, aufweist,
eine Anzeige (19), auf welcher die Eingabe der Folge von Zeichen dargestellt wird, und einen Prozessor (21), der
eine Einrichtung zum Untersuchen der Folge von Zeichen nach einem ersten Wort an dem Anfang der Folge von Zeichen,
eine Einrichtung zum Bestimmen, dass das erste Wort nicht in einer Liste von ersten Wörtern, die eine Frage anzeigen, vorhanden ist,
eine Einrichtung zum Untersuchen der Folge von Zeichen nach einem dritten Wort an dem Anfang der Folge von Zeichen in Antwort auf das erste Wort, das nicht in der Liste von ersten Wörtern vorhanden ist,
eine Einrichtung zum Bestimmen, ob eine erste Kombination, welche das erste Wort und das dritte Wort umfasst, in einer Liste von Kombinationen von ersten und dritten Wörtern, die eine Frage anzeigen, vorhanden ist, und
eine Einrichtung zum Hinzufügen einer interrogativen Interpunktion der Folge von Zeichen auf der Anzeige (19) in Antwort auf die erste Kombination, die in der Liste von Kombinationen vorhanden ist, wenn die Beendigungs-Eingabe betätigt wird, umfasst.

10. Vorrichtung (1) nach Anspruch 9, wobei die Einrichtung, welche die interrogative Interpunktion aufweist, ein "?" (Fragezeichen) an das Ende der Folge von Zeichen hinzufügt.

11. Vorrichtung (1) nach Anspruch 10, wobei die Folge von Zeichen Wörter in der spanischen Sprache ausdrückt und die Einrichtung zum Hinzufügen der interrogativen Interpunktion der Folge von Zeichen weiterhin ein "¿" (Umgedrehtes Fragezeichen) an den Anfang der Folge von Zeichen hinzufügt.

12. Vorrichtung (1) nach Anspruch 9, wobei die Tastatur weiterhin eine Einrichtung zum Ausschalten des Fragezeichens umfasst.

13. Vorrichtung (1) nach Anspruch 9, wobei die Beendigungs-Eingabe eine Leertaste (7), die zweimal betätigt wird, um die Folge von Zeichen zu beenden, umfasst.

14. Vorrichtung nach Anspruch 13, wobei die Leertaste einen Leerraum nach dem "?" (Fragezeichen) an das Ende der Folge von Zeichen, wenn sie zweimal hintereinanderfolgend betätigt wird, hinzufügt.

15. Vorrichtung nach Anspruch 9, wobei der Prozessor (21) weiterhin umfasst:
Eine Einrichtung zum Untersuchen der Folge von Zeichen nach einem weiteren ersten Wort nach einem Komma oder einem Strichpunkt,
eine Einrichtung zum Bestimmen, ob das weitere erste Wort in der Liste von ersten Wörtern, die eine Frage anzeigen, vorhanden ist,
eine Einrichtung zum Untersuchen der Folge von Zeichen nach einem weiteren dritten Wort nach dem Komma oder Strichpunkt in Antwort auf das weitere erste Wort, das nicht in der Liste von ersten Wörtern vorhanden ist,
eine Einrichtung zum Bestimmen, ob eine zweite Kombination, welche das weitere erste Wort und das weitere dritte Wort umfasst, in der Liste von Kombinationen vorhanden ist, und die Einrichtung zum Hinzufügen der interrogativen Interpunktion weiterhin eine Einrichtung zum Hinzufügen der interrogativen Interpunktion der Folge von Zeichen umfasst, wenn die Beendigungs-Eingabe in Antwort auf das weitere erste Wort, das in der Liste von ersten Wörtern vorhanden ist, oder die zweite Kombination, die in der Liste von Kombinationen vorhanden ist, betätigt wird.

## Revendications

1. Procédé consistant à entrer une ponctuation d'interrogation dans un texte généré par un dispositif électronique de poche (1), le procédé comprenant les étapes consistant à :
saisir une séquence de caractères constituant le texte ;
examiner la séquence de caractères pour rechercher un premier mot au commencement de la séquence de caractères ;
déterminer que le premier mot n'est pas présent dans une liste de premiers mots indiquant une interrogation ;
examiner la séquence de caractères pour rechercher un troisième mot à partir du commencement de la séquence de caractères en réponse au fait que le premier mot n'est pas présent dans la liste de premiers mots ;
déterminer si une première combinaison comprenant le premier mot et le troisième mot est présente dans une liste de combinaisons de premiers et de troisièmes mots indiquant une interrogation ; et
saisir une terminaison de la séquence de caractères et ajouter automatiquement la ponctuation d'interrogation à la séquence de caractères en réponse au fait que la première combinaison est présente dans la liste de combinaisons.

2. Procédé selon la revendication 1, dans lequel le dispositif électronique de poche (1) comporte un clavier (3) comprenant des touches de caractères (5) et une entrée de point et dans lequel la saisie de la séquence de caractères comprend l'actionnement des touches de caractères (5) et dans lequel la saisie de la terminaison de la séquence de caractères comprend l'actionnement de l'entrée d'un point.

3. Procédé selon la revendication 2, dans lequel la saisie d'un point correspond à une barre d'espacement (7) et l'activation de la saisie du point comprend l'actionnement de la barre d'espacement (7) deux fois de suite.

4. Procédé selon la revendication 3, dans lequel l'actionnement de la barre d'espacement (7) deux fois de suite ajoute un "?" (point d'interrogation) à la fin de la séquence de caractères.

5. Procédé selon la revendication 4, dans lequel l'actionnement de la barre d'espacement (7) deux fois ajoute en outre un espace après le "?" (point d'interrogation).

6. Procédé selon la revendication 1, dans lequel l'ajout automatique de la ponctuation d'interrogation comprend l'ajout d'un "?" (point d'interrogation) à la fin de la séquence de caractères.

7. Procédé selon la revendication 6, dans lequel la séquence de caractères définit une mention en langue espagnole, et l'ajout automatique de la ponctuation d'interrogation comprend l'ajout d'un "¿" (point d'interrogation inversé) au début de la séquence de caractères et l'ajout d'un "?" (point d'interrogation) à la fin de la séquence de caractères.

8. Procédé selon la revendication 1, comprenant en outre les étapes consistant à :
examiner la séquence de caractères pour rechercher un autre premier mot après une virgule ou un point-virgule ;
déterminer si l'autre premier mot est présent dans la liste de premiers mots indiquant une interrogation ;
examiner la séquence de caractères pour rechercher un autre troisième mot après la virgule ou le point-virgule en réponse au fait que l'autre premier mot n'est pas présent dans la liste de premiers mots ;
déterminer si une seconde combinaison comprenant l'autre premier mot et l'autre troisième mot est présente dans la liste de combinaisons ; et
saisir une terminaison de la séquence de caractères et ajouter automatiquement la ponctuation d'interrogation à la séquence de caractères en réponse au fait que l'autre premier mot est présent dans la liste de premiers mots ou au fait que la seconde combinaison est présente dans la liste de combinaisons.

9. Dispositif électronique de poche (1) comprenant :
un clavier (3) comportant une pluralité de touches (5) par l'intermédiaire desquelles une séquence de caractères peut être saisie et une terminaison saisie par le biais de laquelle il peut être mis fin à la séquence de caractères ;
un dispositif d'affichage (19) sur lequel la séquence de caractères saisis est affichée ; et
un processeur (21) comprenant un moyen destiné à examiner la séquence de caractères pour rechercher un premier mot au commencement de la séquence de caractères ;
un moyen destiné à déterminer que le premier mot n'est pas présent dans une liste de premiers mots indiquant une interrogation ;
un moyen destiné à examiner la séquence de caractères pour rechercher un troisième mot au commencement de la séquence de caractères en réponse au fait que le premier mot n'est pas présent dans la liste de premiers mots ;
un moyen destiné à déterminer si une première combinaison comprenant le premier mot et le troisième mot est présente dans une liste de combinaisons de premiers et de troisièmes mots indiquant une interrogation ; et
un moyen destiné à ajouter une ponctuation d'interrogation à la séquence de caractères sur le dispositif d'affichage (19) en réponse au fait que la première combinaison est présente dans la liste de combinaisons lorsque la saisie de la terminaison est réalisée.

10. Dispositif (1) selon la revendication 9, dans lequel le moyen comportant la ponctuation d'interrogation ajoute un "?" (point d'interrogation) à la fin de la séquence de caractères.

11. Dispositif (1) selon la revendication 10, dans lequel la séquence de caractères exprime des mots en langue espagnole et le moyen ajoutant la ponctuation d'interrogation à la séquence de caractères ajoute en outre un "¿" (point d'interrogation inversé) avant la séquence de caractères.

12. Dispositif (1) selon la revendication 9, dans lequel le clavier comprend en outre un moyen pour ne pas tenir compte de la ponctuation d'interrogation.

13. Dispositif (1) selon la revendication 9, dans lequel la saisie de la terminaison correspond à une barre d'espacement (7) qui est actionnée deux fois pour mettre fin à la séquence de caractères.

14. Dispositif selon la revendication 13, dans lequel la barre d'espacement ajoute un espace après le "?" (point d'interrogation) à la fin de la séquence de caractères lorsqu'elle est actionnée deux fois de suite.

15. Dispositif selon la revendication 9, dans lequel le processeur (21) comprend en outre
un moyen destiné à examiner la séquence de caractères pour rechercher un autre premier mot après une virgule ou un point-virgule ;
un moyen destiné à déterminer si l'autre premier mot est présent dans la liste de premiers mots indiquant une interrogation ;
un moyen destiné à examiner la séquence de caractères pour rechercher un autre troisième mot après une virgule ou un point-virgule en réponse au fait que l'autre premier mot n'est pas présent dans la liste de premiers mots ;
un moyen destiné à déterminer si une seconde combinaison comprenant l'autre premier mot et l'autre troisième mot est présente dans la liste de combinaisons ;
et le moyen destiné à ajouter une ponctuation d'interrogation comprend en outre un moyen destiné à ajouter la ponctuation d'interrogation à la séquence de caractères lorsque la saisie de la terminaison est réalisée en réponse au fait que l'autre premier mot est présent dans la liste de premiers mots ou que la seconde combinaison est présente dans la liste de combinaisons.
